## Europäisches Patentamt
## European Patent Office
## Office européen des brevets

(19)

(11) Veröffentlichungsnummer: **0 012 809**
B1

(12)
# EUROPÄISCHE PATENTSCHRIFT

(45) Veröffentlichungstag der Patentschrift:
05.05.82

(21) Anmeldenummer: **79104139.5**

(22) Anmeldetag: **25.10.79**

(51) Int. Cl.³: **C 08 J 3/12,** C 08 G 69/46, C 09 D 3/70

(54) Verfahren zur Herstellung von pulverförmigen Beschichtungsmitteln zur Beschichtung von metallischen Gegenständen nach dem Schmelzüberzugsverfahren auf der Basis von Polylaurinlactampulver und deren Verwendung zur Herstellung gefärbter Pulver nach dem "dry-blend-Verfahren".

(30) Priorität: **23.12.78 DE 2855920**

(43) Veröffentlichungstag der Anmeldung:
**09.07.80 Patentblatt 80/14**

(45) Bekanntmachung des Hinweises auf die Patenterteilung:
**05.05.82 Patentblatt 82/18**

(84) Benannte Vertragsstaaten:
**BE CH FR GB IT NL SE**

(56) Entgegenhaltungen:

**FR-A-2 327 283**
**FR-A-2 358 365**

**CHEMICAL ABSTRACTS, Band 75 (1971), Nr. 26, 27. Dezember; Seite 29, Zusammenfassung 152506f. Columbus, Ohio, USA**

(73) Patentinhaber: **CHEMISCHE WERKE HÜLS AG, Postfach 1320, D-4370 Marl 1 (DE)**

(72) Erfinder: **Feldmann, Rainer, Dr., Leverkusener Strasse 27, D-4370 Marl (DE)**
Erfinder: **Müller, Karl-Adolf, Dr., Neumarkstrasse 3, D-4370 Marl (DE)**
Erfinder: **Hornung, Karl-Heinz, Dr., Brandenburgische Strasse 15, D-4370 Marl (DE)**

## Verfahren zur Herstellung von pulverförmigen Beschichtungsmitteln zur Beschichtung von metallischen Gegenständen nach dem Schmelzüberzugsverfahren auf der Basis von Polylaurinlactampulver und deren Verwendung zur Herstellung gefärbter Pulver nach dem «dry-blend-Verfahren»

Gegenstand der Erfindung ist ein verbessertes Verfahren zur Herstellung von Beschichtungsmitteln zur Beschichtung von metallischen Gegenständen nach dem Schmelzüberzugsverfahren auf der Basis von Polylaurinlactampulver, welches aus Polylaurinlactamgranulaten erhalten wird, die durch Polymerisation von Laurinlactam in Gegenwart von 2 bis 10 Gewichtsprozent Wasser, 0,3 bis 0,7 Gewichtsprozent Phosphorsäure bei Temperaturen zwischen 265 und 300°C in Abwesenheit jeglicher Kettenstabilisatoren unter Eigendruck erhalten worden sind.

Es ist bekannt, pulverförmige Beschichtungsmittel auf Basis von Polyamiden zur Herstellung lackähnlicher Überzüge von Metallen einzusetzen. Die Beschichtung erfolgt nach dem Schmelzüberzugsverfahren. Darunter wird verstanden das Wirbelsinterverfahren, das Flammspritzverfahren oder das elektrostatische Beschichtungsverfahren.

Ein besonders vorteilhaftes Verfahren ist in der DE-AS 2 545 267 beschrieben. Diese Arbeitsweise ist insoweit jedoch noch verbesserungswürdig. Nach der bekannten Arbeitsweise ist es erforderlich, zwei unterschiedliche Arbeitsfolgen einzuhalten für nicht-pigmentierte und pigmentierte Beschichtungspulver. So müssen die nichtpigmentierten sogenannten Naturpulver, die durch Mahlen erhalten wurden, in festem Zustand nachkondensiert werden, was die Raumzeitausbeute verringert und höhere Energiekosten verursacht.

Die pigmentierten Pulver erfordern dagegen einen vollkommen anderen Herstellungsweg, nämlich das Herstellen durch Umfällen aus Lösemitteln. Folglich müssen für die Herstellung der verschiedenen Pulver zwei unterschiedliche Produktionsstrassen errichtet werden, was einen wesentlich höheren Aufwand erfordert und den Nachteil des Umganges mit Lösemitteln besitzt.

Schliesslich befriedigen die nach dem beschriebenen Stande der Technik erhaltenen Pulver noch nicht hinreichend in ihrer Qualität. Sowohl die sogenannten Naturpulver als auch die pigmentierten Pulver weisen, insbesondere nach der sogenannten «dry-blend-Einfärbung» und bei der Beschichtung von dickeren Metallteilen, einen starken Abfall der Elastizität auf. Ausserdem besitzen die Pulver eine geringe Gilbungsresistenz (Überbrennstabilität). Dieser Nachteil äussert sich dadurch, dass beim Beschichten unterschiedlich dicker Metallteile Farbunterschiede auftreten. Diese unterschiedlich starke Vergilbung zeigen sowohl die Naturpulver wie auch die aus diesen Pulvern durch «dry-blend-Einfärbung» erhaltenen Farbpulver.

Die Aufgabe bestand darin, ein vereinfachtes Herstellungsverfahren zu finden, das sowohl für die Herstellung pigmentierter als auch pigmentfreier Pulver geeignet ist. Ferner sollten die so hergestellten Pulver die geschilderten Nachteile der verringerten Elastizität und der Vergilbung nicht aufweisen und schliesslich sollten die bereits bestehenden guten Eigenschaften nicht verlorengehen.

Die Lösung dieser Aufgabe gelingt, wenn man Granulate mit einer Viskosität $\eta_{rel}$ von 1,50 bis 1,80 (gemessen in 0,5% m-Kresollösung bei 25°C) nach Vorkühlen in flüssigem Stickstoff bei −100 bis 0°C mahlt, die Pulver durch Sieben und Sichten auf eine Korngrössenverteilung von mindestens 99% > 40 μm und mindestens 99% < 250 μm klassiert, wobei vor dem Mahlen oder vor oder nach dem Klassieren mit Methanol oder Ethanol bei 25 bis 100°C extrahiert wird und beim Herstellen pigmentierter Pulver die Pigmente vor oder während der Polymerisa... dem monomeren Laurinlactam oder nach der Polymerisation vor dem Granulieren dem Polylaurinlactam zugesetzt werden.

Die eingesetzten Polylaurinlactamgranulate werden erhalten durch Polymerisation von Laurinlactam in Gegenwart von 2 bis 10 Gewichtsprozent Wasser und 0,3 bis 0,7 Gewichtsprozent Phosphorsäure in Abwesenheit jeglicher Kettenstabilisatoren bei Temperaturen zwischen 265 und 300°C unter Eigendruck.

Die eingesetzten Granulate können in einem breiteren Viskositätsbereich eingesetzt werden, nämlich $\eta_{rel}$ von 1,50 bis 1,80.

Gegenüber dem Verfahren A der DE-AS 2 545 267 besteht darüber hinaus der Vorteil, dass die Nachkondensationsstufe entfallen kann. Gegenüber dem Verfahren B der DE-AS besteht der Vorteil, dass die Fällungmethode unterbleiben kann und, dass die Pigmente nicht in einer gesonderten besonderen Verfahrensstufe zugesetzt werden müssen.

Auch hinsichtlich der zwischengeschalteten Extraktionsstufe ist man nicht an eine bestimmte Reihenfolge gebunden. Geeignete Pigmente sind z.B. Titandioxid, Bariumsulfat, Eisenoxid, Cadmium-Pigmente oder Russ die in üblichen Mengen von 1 bis 20, vorzugsweise 2 bis 10 Gewichtsprozent, vor oder während der Polymerisation oder nach der Polymerisation dem Polyamid vor dem Granulieren zugesetzt werden.

Die gegebenenfalls pigmentierten Granulate werden nach Vorkühlen in flüssigem Stickstoff bei Temperaturen von −100 bis 0°C, vorzugsweise −70 bis −20°C, vorzugsweise durch Prallzerkleinerung, gemahlen. Nach dem Mahlen werden die Grobanteile > 250 μm beispielsweise unter einem Luftstrahlsieb abgesiebt. Der störende Feinanteil < 40 μm wird beispielsweise mit Schwerkraftsichtern ausgeschleust. Die Korngrössenverteilung liegt demnach zumindest 99% > 40 μm und mindestens 99% < 250 μm, mit anderen Worten der Grob- und Feinanteil soll weniger als 1% betragen.

Wirbelsinterpulver haben im allgemeinen eine Korngrössenverteilung innerhalb dieses Bereiches von 30 bis 300 μm, insbesondere von 60 bis 250 μm, Elektrostatik- bzw. Flammspritzpulver

eine solche, von 0 bis 100, insbesondere von 0 bis 80 µm. Das Qualmen während des Beschichtungsprozesses wird verhindert durch die Extraktion mit Methanol oder Ethanol bei 25 bis 100°C, insbesondere bei Rückflusstemperatur des Alkohols. Bei Temperaturen oberhalb des Siedepunktes des Alkohols arbeitet man entsprechend unter Druck. Die Extraktion kann sowohl in der Granulatstufe erfolgen oder auch durch Extrahieren der Pulver, wobei diese sowohl vor als nach dem Klassieren extrahiert werden können. Nach dem Extrahieren werden die Granulate bzw. die Pulver in üblicher Weise getrocknet, z.B. durch Behandlung in einem Schaufel- oder Taumeltrockner bei Temperaturen zwischen 40 und 100°C in einer Inertgasatmosphäre oder gegebenenfalls durch Anlegen eines Vakuums. Alterungs-, Wärme- oder Lichtstabilisatoren, die üblicherweise in Mengen von 0,1 bis 2 Gewichtsprozent vorhanden sind, wie sterisch gehinderte Phenole, Triazine, Phosphite, unterphosphorige Säure, Hypophosphite können während oder nach der Polymerisation oder auch beispielsweise beim Extraktions- oder Mahlprozess zugegeben werden.

Die vereinfachte Arbeitsweise erlaubt, Beschichtungen, insbesondere nach dem Wirbelsinterverfahren, ohne störenden Qualm herzustellen, die einen sehr guten Verlauf, eine gute Kantenbeschichtung, Haftung sowie eine ausgezeichnete Beständigkeit gegenüber wässrigen alkalischen Lösungen aufweisen. Darüber hinaus bleiben die Beschichtungen auch beim Beschichten dicker Metallteile elastisch und sind sehr gilbungsresistent. Nach dem «dry-blend-Verfahren» eingefärbte Pulver weisen ein wesentlich besseres mechanisches Eigenschaftsbild auf.

Beispiel 1

In einem Autoklaven werden 10 kg Laurinlactam gemeinsam mit 800 g Wasser und 60 g 85%iger Phosphorsäure 7 Stunden auf 280°C erhitzt, wobei sich ein Druck von 19 bar einstellt. Danach wird entspannt und bei Erreichen einer Viskosität von $\eta_{rel} = 1,60$ ausgefahren und granuliert. Die Polymerteilchen werden mit der zweifachen Gewichtsmenge Ethanol 5 Stunden unter Rückfluss gekocht. Danach werden 100 g 4-Hydroxi-3,5-di-tert.-butyl-phenylpropionsäurehexamethylenbisamid gelöst in 1 l Ethanol eingerührt. Nach Abdestillation des Lösungsmittels u. Trocknung wird das Granulat mit flüssigem Stickstoff (−190°C) vorgekühlt und bei −40°C gemahlen. Der Pulveranteil > 250 µm wird mit einem Luftstrahlsieb abgesiebt, der Anteil < 40 µm mit einem Windsichter abgetrennt.

Die Beschichtung nach dem Wirbelsinterverfahren ergibt folgende Bewertung: kein Qualmen bei der Beschichtung, glatte Oberfläche, guter Verlauf in Kreuzgitterstellen, sehr gute Beschichtung von scharfen Kanten, Erichsen-Tiefung > 10 mm, Schlagtiefe > 1800 mm/7,6 kg, Beständigkeit gegenüber 1%iger kochender Lauge eines Grobwaschmittels > 2000 Stunden, Vergilbung bei der Beschichtung eines Metallteils bei 260°C mit den Abmessungen 14 × 25 × 80 mm: nicht feststellbar.

Durch Zumischen von 2% Titandioxid-Pigment und 0,1% Russ im «dry-blend-Verfahren» wird aus dem Naturpulver ein graues Pulver hergestellt. Bei der Beschichtung einer Metallplatte von 1 mm Dicke wird eine Schicht erhalten, die beim plötzlichen Knicken um 180°C nicht reisst.

Beispiel 2

Es wird wie in Beispiel 1 gearbeitet mit dem Unterschied, dass vor der Polykondensation 600 g Titandioxid zugesetzt werden.

Die Beschichtung mit dem Weisspulver nach dem Wirbelsinterverfahren ergibt die gleiche Bewertung wie bei dem Naturpulver von Beispiel 1. Auch hier wird bei der Beschichtung eines Metallteils bei 260°C mit den Abmessungen 14 × 25 × 80 mm keine Vergilbung festgestellt.

Durch Zumischen von 2% Cadmiumgelb-Pigment im «dry-blend-Verfahren» wird ein Gelbpulver hergestellt. Bei der Beschichtung einer Metallplatte von 1 mm Dicke wird eine Schicht erhalten, die bei einem plötzlichen Knicken um 180°C nicht reisst.

Vergleichsbeispiel 1:
(DE-AS 2 545 267 Methode A)

In einem Autoklaven werden 10 g Laurinlactam gemeinsam mit 800 g Wasser und 60 g 85%iger Phosphorsäure 7 Std. auf 280°C erhitzt, wobei sich ein Druck von etwa 19 bar einstellt. Danach wird auf 240 bis 230°C abgekühlt (Druck etwa 13 bis 14 bar) und das Bodenventil geöffnet. Das Polymer wird durch einen Wasserstrahl, der in einem Winkel von etwa 90° auf den Polymerstrang trifft, in ein Wasserbad geleitet und nach dem Abkühlen in einer Schneidmühle zerkleinert bzw. geschrotet. Das Polylaurinlactam wird bei einem Druck von etwa 30 mbar und einer Temperatur von 60 bis 80°C getrocknet. Die Lösungsviskosität beträgt $\eta_{rel} = 1,39$.

Die Polymerteilchen werden mit der zweifachen Gewichtsmenge Methanol 2 Stunden unter Rückfluss gekocht. Das Methanol wird abgelassen und durch die gleiche Menge frisches Methanol ersetzt. Es wird wiederum 2 Stunden unter Rückfluss gekocht, das Methanol abgelassen und bei 30 mbar und 80°C getrocknet. Das Polylaurinlactam wird in einer Pralltellermühle bei einer Kreisgastemperatur von 20°C gemahlen. Die Mühle wird durch teilweise Zugabe von flüssigem Stickstoff auf der Temperatur von 20°C gehalten. Anschliessend wird das Pulver in einem Trockenschrank in dünner Schicht durch Überleiten von Stickstoff bei einer Temperatur von 145°C 5 Stunden lang nachkondensiert. Das Pulver besitzt dann eine Lösungsviskosität von $\eta_{rel} = 1,59$.

Die Beschichtung nach dem Wirbelsinterverfahren ergibt folgende Bewertung: kein Qualmen bei der Beschichtung, glatte Oberfläche der Schicht, gute bis sehr gute Beschichtung von scharfen Kanten, Erichsen-Tiefung > 10 mm, Schlag von > 1800 mm/7,6 kg, Beständigkeit gegenüber 1%iger kochender Lauge eines Kochwaschmittels > 2000 Stunden, Vergilbung bei der Beschichtung eines Metallteils bei 260°C mit den Abmessungen 14 × 25 × 80 mm: sehr stark.

Durch Zumischung von 2% Titandioxidpigment und 0,1% Russ im «dry-blend-Verfahren» wird aus dem Naturpulver ein graues Pulver hergestellt. Bei der Beschichtung einer Metallplatte von 1 mm Dicke wird eine Schicht erhalten, die beim plötzlichen Knicken um 180°C aufreisst. Bei der Beschichtung eines Metallteils bei 260°C mit den Abmessungen 14 × 25 × 80 mm wird ebenfalls eine starke vergilbte Beschichtung erhalten.

Vergleichsbeispiel 2:
(DE-AS 2 545 267 Methode B)

Ein nach Vergleichsbeispiel 1 hergestelltes Polylaurinlactam mit einer Lösungsviskosität von $\eta_{rel} = 1,60$, das geschrotet und extrahiert war, wurde eingesetzt.

In einen Glasautoklav werden 100 g dieses Polylaurinlactams, 200 ml Ethanol und 7 g Titandioxid-Pigment gefüllt. Es wird 2 Stunden auf 140°C erhitzt, wobei sich ein Druck von etwa 7 bar einstellt. Anschliessend wird mit einer Rührgeschwindigkeit von etwa 5 U/min abgekühlt mit 1°C/min. Das Pulver wird in einem Trockenschrank bei 0,7 mbar und 80°C getrocknet. Bei der Beschichtung von Metallteilen wird bei den weiss eingefärbten Pulvern in allen Punkten die gleiche Bewertung wie bei den Naturpulvern des Vergleichsbeispiels 1 erhalten. Auch hier wird bei der Beschichtung eines Metallteils bei 260°C mit den Abmessungen 14 × 25 × 80 mm eine starke Vergilbung festgestellt.

Durch Zumischung von 2% Cadmiumgelb-Pigment im «dry-blend-Verfahren» wird ein Gelbpulver hergestellt. Bei der Beschichtung auf einer Metallplatte von 1 mm Dicke wird eine Schicht erhalten, die beim plötzlichen Knicken um 180°C reisst.

In der folgenden Tabelle sind die Ergebnisse aus den Beispielen und Vergleichsbeispielen zusammengestellt.

Tabelle

| | Kanten-beschich-tung | Laugen-test (h) | Schlag-tiefung mm/7,6 kg | Vergil-bung | Knicktest vor/nach Einfärb. | |
|---|---|---|---|---|---|---|
| Beispiel 1 | sehr gut | 2000 | 1800 | nein | + | + |
| Beispiel 2 | sehr gut | 2000 | 1800 | nein | + | + |
| Vergl.-Beispiel 1 | sehr gut | 2000 | 1800 | ja | + | − |
| Vergl.-Beispiel 2 | sehr gut | 2000 | 1800 | ja | + | − |

## Patentansprüche

1. Verfahren zur Herstellung von pulverförmigen Beschichtungsmitteln zur Beschichtung von metallischen Gegenständen nach dem Schmelzüberzugsverfahren auf der Basis von Polylaurinlactampulver, welches aus Polylaurinlactamgranulaten erhalten wird, die durch Polymerisation von Laurinlactam in Gegenwart von 2 bis 10 Gewichtsprozent Wasser, 0,3 bis 0,7 Gewichtsprozent Phosphorsäure bei Temperaturen zwischen 265 und 300°C in Abwesenheit jeglicher Kettenstabilisatoren unter Eigendruck erhalten worden sind, dadurch gekennzeichnet, dass man zur Herstellung sowohl pigmentfreier als auch pigmentierter Polylaurinlactampulver Granulate mit einer Viskosität $\eta_{rel}$ von 1,50 bis 1,80 (gemessen in 0,5% m-Kresollösung bei 25°C) nach Vorkühlen in flüssigem Stickstoff bei Temperaturen von −100 bis 0°C mahlt, die Pulver durch Sieben und Sichten auf eine Korngrössenverteilung von mindestens 99% > 40 μm und mindestens 99% < 250 μm klassiert, wobei vor dem Mahlen oder vor oder nach dem Klassieren mit Methanol oder Ethanol bei 25 bis 100°C extrahiert wird und beim Herstellen pigmentierter Pulver die Pigmente vor oder während der Polymerisation dem monomeren Laurinlactam oder nach der Polymerisation vor dem Granulieren dem Polylaurinlactam zugesetzt werden.

2. Verwendung der nach dem Verfahren gemäss Anspruch 1 erhaltenen Beschichtungspulver zur Herstellung gefärbter Pulver nach dem «dry-blend-Verfahren».

## Claims

1. A process for the preparation of a powdery coating composition for coating metallic objects by the melt-coating process, the composition being based on polylaurolactam powder which has been obtained from polylaurolactam granules which in turn have been obtained by polymerisation of lauric acid lactam in the presence of 2 to 10 weight percent of water and 0.3 to 0.7 weight percent of phosphoric acid at a temperature of from 265 to 300°C in the absence of any chain stabilisers at autogenous pressure, characterised in that for the preparation of the composition not only pigmentfree polylaurolactam granules but also pigmented polylaurolactam granules are used ta a viscosity $\eta_{rel}$ of 1.50 to 1.80 (measured in 0.5% m-cresol solution at 25°C) and are ground after cooling in liquid nitrogen at a temperature from −100 to 0°C, and the powder is classified by seperating coarse and fine particles to provide a particle size distribution of at least 99% > 40 μm, and at least 99% < 250 μm, the powder being extracted with methanol or ethanol at 25 to 100°C before the grinding or before or after the classifying and in the case of the preparation of pigmented powder the pigment being incorporated into the polylaurolactam before or during the polymerisation of the monomeric lauric acid lactam or after the polymerisation but before the granulation.

2. The use of the coating powder obtained by the process according to claim 1 for the preparation of pigmented powder by the «dry-blend process».

**Revendications**

1. Procédé de fabrication d'agents de revêtement pulvérulents pour le revêtement d'objets métalliques selon le procédé de revêtement par fusion, à base de poudre de polylaurolactame que l'on obtient en partant de granulés de polylaurolactame qui ont été obtenus par polymérisation du laurolactame sous la pression autogène en présence de 2 à 10% en poids d'eau et de 0,3 à 0,7% en poids d'acide phosphorique, à des températures comprises entre 265 et 300°C, en l'absence de tous stabilisateurs de chaîne, caractérisé par le fait que, pour l'obtention de poudres de polylaurolactame aussi bien exemptes de pigment que pigmentées, on broie des granulés ayant une viscosité $\eta_{rel}$ de 1,50 à 1,80 (mesurée en solution à 0,5% dans le m-crésol à 25°C), après refroidissement préalable dans l'azote liquide à des températures de −100 à 0°C, que l'on classifie les poudres, par tamisage et élutriation, jusqu'à avoir une distribution granulométrique d'au moins 99% > 40 μm et d'au moins 99% < 250 μm, en extrayant par le méthanol ou l'éthanol entre 25 et 100°C avant le broyage ou avant ou après la classification et que, dans le cas où l'on fabrique des poudres pigmentées, on ajoute les pigments, avant ou pendant la polymérisation, au laurolactame monomère ou après la polymérisation et avant la granulation, au polylaurolactame.

2. Application des poudres de revêtement obtenues selon le procédé selon la revendication 1 à la fabrication de poudres colorées selon le procédé de mélange à sec.